# EUROPÄISCHE PATENTSCHRIFT

(11) **EP 1 531 342 B1**
(45) Veröffentlichungstag und Bekanntmachung des Hinweises auf die Patenterteilung: **17.12.2008**
(21) Anmeldenummer: 04024973.2
(22) Anmeldetag: 20.10.2004
(51) Int. Cl.: G01S 17/93, G01S 17/66, G01S 17/89

(54) **Verfahren zur Erkennung von Fussgängern**
Method of detecting pedestrians
Procédé de détection des piétons

(30) Priorität: 14.11.2003 DE 10353347
(43) Veröffentlichungstag der Anmeldung: 18.05.2005
(73) Patentinhaber: IBEO Automobile Sensor GmbH, 22179 Hamburg (DE)
(72) Erfinder: Fürstenberg, Kay, 20459 Hamburg (DE); Dietmayer, Klaus, Prof., 89075 Ulm (DE); Lages, Ulrich, Dr., 21031 Hamburg (DE)
(74) Vertreter: Manitz, Finsterwald & Partner GbR

(56) Entgegenhaltungen:
- US-A- 6 035 053
- FUERSTENBERG K. ET AL: "pedestrian detection and classification by laserscanners" 9TH EAEC INTERNATIONAL CONGRESS, Juni 2003 (2003-06), XP002309935 PARIS FRANCE
- CHIA-JUNG PAI ET AL: "Pedestrian detection and tracking at crossroads" PROCEEDINGS 2003 INTERNATIONAL CONFERENCE ON IMAGE PROCESSING, 14. - 17. September 2003, Seiten 1-4, XP002309936 BARCELONA SPAIN
- FUERSTENBERG K CH ET AL: "Pedestrian recognition in urban traffic using a vehicle based multilayer laserscanner" PROCEEDINGS OF IV 2002, IEEE INTELLIGENT VEHICLES SYMPOSIUM, Bd. 1, 17. Juni 2002 (2002-06-17), Seiten 31-35, XP010635665
- BÜHLER TOBIAS: "Dynamische Modellierung und Erfassung der Beinbewegung eines Fussgängers mit einem mehrzeiligen Laserscanner" Juli 2003 (2003-07) , UNIVERSITÄT ULM , ULM XP002309559 * das ganze Dokument *

## Beschreibung

Die vorliegende Erfindung betrifft ein Verfahren zur Erkennung von Fußgängern gemäß dem Oberbegriff des Anspruchs 1. Ein Verfahren mit den Merkmalen des Oberbegriffs des Anspruchs 1 ist aus der Veröffentlichung "Pedestrian Detection and Classification by Laserscanners", Kay C. Fürstenberg et al., 9th EAEC International Congress, Juni 2003, Paris, Frankreich bekannt.

Im Straßenverkehr besteht häufig die Gefahr, dass ein gehender Fußgänger mit einem Kraftfahrzeug kollidiert. Es wäre daher wünschenswert, den Bereich vor dem Kraftfahrzeug automatisch überwachen zu können.

Zur Überwachung eines Bereichs vor und/oder neben einem Kraftfahrzeug können Verfahren zur Objekterkennung und -verfolgung eingesetzt werden, die auf der Basis von Abstandsbildern des Überwachungsbereichs arbeiten. Dabei werden mit einem geeigneten Sensor, beispielsweise einem Laserscanner, Bilder eines vorzugsweise ebenen Erfassungsbereichs erfasst, die Bildpunkte aufweisen, die den Abstand von erfassten Punkten auf Gegenständen bei einem gegebenen Winkel in einem Polarkoordinatensystem mit Ursprung in dem Laserscanner wiedergeben. Ein derartiges Verfahren ist beispielsweise in der deutschen Patentanmeldung DE 101 48 071 A1 beschrieben.

Ein solches Verfahren ermöglicht zwar die Erkennung von sich bewegenden Fußgängern auf der Basis der Größe und Geschwindigkeit der den Fußgängern entsprechenden Objekte, jedoch ist eine Unterscheidung von anderen in der Erfassungsebene ähnlich großen, insbesondere bewegten Gegenständen, beispielsweise einem Ball, kaum möglich.

Sollen Ergebnisse einer Objektverfolgung jedoch dazu dienen, gegebenenfalls in die Steuerung eines Kraftfahrzeugs einzugreifen, um eine Kollision mit Fußgängern zu vermeiden, ist eine zuverlässige Erkennung von Fußgängern notwendig. Beispielsweise besteht bei einem plötzlich eingeleiteten Bremsmanöver die Gefahr, dass ein folgendes Kraftfahrzeug auf das bremsende Kraftfahrzeug auffährt. Diese Gefahr kann hingenommen werden, wenn ein Fußgänger geschützt werden soll, weniger jedoch, wenn nur ein Ball auf die Fahrbahn rollt.

Die Veröffentlichung "Pedestrian Detection and Tracking at Crossroads", C.-J. Pai et al., Proceedings 2003 International Conference on Image Processing, September 2003, Barcelona, Spanien beschreibt ein Verfahren zur Fußgängererkennung und -verfolgung, bei dem der Geh-Rhythmus des Fußgängers berücksichtigt wird.

Der vorliegenden Erfindung liegt daher die Aufgabe zugrunde, ein Verfahren zur Fußgängererkennung bereitzustellen, das eine gute Unterscheidung zwischen sich bewegenden Fußgängern und anderen Gegenständen bietet.

Die Aufgabe wird gelöst durch ein Verfahren zur Erkennung von Fußgängern mit den Merkmalen des Anspruchs 1.

Bei dem erfindungsgemäßen Verfahren zur Erkennung von Fußgängern auf der Basis von in zeitlicher Folge von wenigstens einem Sensor für elektromagnetische Strahlung, insbesondere einem Laserscanner, erfassten Abstandsbildern eines Erfassungsbereichs des Sensors, wird in aufeinander folgenden Zyklen eine Objektverfolgung von Objekten, die von dem Sensor erfassten Gegenständen in dem Erfassungsbereich entsprechen, durchgeführt, wobei für wenigstens ein Objekt in mehreren aufeinander folgenden Zyklen Verteilungen von dem Objekt in den jeweiligen Zyklen zugeordneten Bildpunkten ermittelt werden, und geprüft, ob sich die Bildpunktverteilungen für das Objekt als Funktion der Zeit wenigstens näherungsweise periodisch ändern.

Unter einem Abstandsbild eines Sensors zur Erfassung elektromagnetischer Strahlung, das häufig auch als tiefenaufgelösten Bild oder Entfernungsbild bezeichnet wird, wird eine Menge von bei einer Abtastung des Erfassungsbereichs des Sensors erfassten Bildpunkten verstanden, denen Punkte bzw., je nach Auflösung des Sensors, auch Bereiche eines von dem Sensor erfassten Gegenstands entsprechen. Die Bildpunkte umfassen dabei wenigstens der Lage der zugehörigen Gegenstandspunkte entsprechende Koordinaten zur Definition einer Lage wenigstens in einer Fläche, vorzugsweise einer Ebene, die nicht orthogonal zu einer Blickrichtung des Sensors steht. Die Bildpunkte können weiterhin Daten über weitere, insbesondere optische, Eigenschaften der Gegenstandspunkte, beispielsweise deren Reflektivität, enthalten. Dabei können Regionen des Erfassungsbereichs, in denen keine Gegenstände vorhanden sind, je nach Sensor trotzdem Bildpunkte zugeordnet sein, die dann entsprechend gekennzeichnet sein können.

Sensoren für elektromagnetische Strahlung zur Erfassung solcher Abstandsbilder sind grundsätzlich bekannt. Bei diesem kann es sich bevorzugt um optoelektronische Sensoren handeln, die eine gute Ortsauflösung bieten und daher für das erfindungsgemäße Verfahren bevorzugt sind. So können beispielsweise Systeme mit Stereo-Videokameras verwendet werden, die eine Einrichtung zur Umsetzung der von den Kameras aufgenommenen Abtastdaten in Abstandsbilder aufweisen.

Vorzugsweise werden jedoch Laserscanner verwendet, die bei einer Abtastung einen Erfassungsbereich mit mindestens einem gepulsten Strahlungsbündel abtasten, das einen vorgegebenen Winkelbereich, vorzugsweise mit einer Schwenkbewegung, überstreicht und von einem Punkt bzw. Bereich eines Gegenstands, meist diffus, zurückgeworfene Strahlungspulse des Strahlungsbündels detektieren. Dabei wird zur Entfernungsmessung die Laufzeit der ausgesandten und zurückgeworfenen Strahlungspulse erfasst. Die so erfassten Abtastdaten für einen Bildpunkt können dann als Koordinaten den Winkel, bei dem der Reflex erfasst wurde, und die aus der Laufzeit der Strahlungspulse bestimmte Entfernung des Gegenstandspunktes von dem Laserscanner enthalten. Bei der Strahlung kann es sich insbesondere um sichtbares oder infrarotes Licht handeln.

Der Sensor erfasst dabei die Abstandsbilder in zeitlicher, vorzugsweise zeitlich äquidistanter Folge, wobei die Bildpunkte innerhalb eines einzelnen Bildes nicht unbedingt nacheinander erfasst zu werden brauchen.

Bei der Umsetzung der Abtastdaten in Bildpunkte können weiterhin Korrekturen, zum Beispiel in Bezug auf die Bewegung des Sensors, vorgenommen werden, jedoch ist dies nicht notwendig.

Das erfindungsgemäße Verfahren wird zyklisch durchgeführt, wobei vorzugsweise für jeden Zyklus ein neues, aktuelles Bild des Sensors in eine zur Durchführung des Verfahrens geeignete Einrichtung eingelesen bzw. zur Durchführung des Verfahrens bereitgestellt wird.

Auf der Basis wenigstens der Abstandsbilder wird eine Objekterkennung und -verfolgung durchgeführt. Dabei können gegebenenfalls zusätzlich zu den Abstands- bzw. Lageinformationen auch noch andere Informationen, beispielsweise von Videosensoren, verwendet werden.

Der einfacheren Formulierung halber wird ein Fußgänger auch als Gegenstand aufgefasst.

Als Objekterkennungs- und -verfolgungsverfahren kann ein beliebiges Verfahren verwendet, bei dem eine Zuordnung von Bildpunkten zu Gegenständen entsprechenden Objekten vorgenommen wird. Insbesondere können auf der Verwendung von Kalman-Filtern beruhende Verfahren, beispielsweise das in der deutschen Patentanmeldung DE 101 48 071 A1 beschriebene Verfahren verwendet werden, deren Inhalt hiermit durch Bezugnahme in die Beschreibung aufgenommen wird.

Obwohl die erfindungsgemäße Erkennung von Fußgängern auf beliebige Objekte angewendet werden kann, wird vorzugsweise ein Verfahren verwendet, bei dem Objekte vorausgewählt werden können, die von ihren bei der normalen Objektverfolgung erkannten Eigenschaften her möglicherweise Fußgängern entsprechen könnten.

Die Erfindung nutzt die Tatsache, dass eine Gehbewegung eines Fußgängers eine periodische Bewegung ist. Diese kann sich in der Bewegung des ganzen Körpers äußern, besonders ausgeprägt ist jedoch die Bewegung der Beine, die näherungsweise einer Pendelbewegung entsprechen kann.

Daher werden erfindungsgemäß in zeitlicher Folge Verteilungen der Bildpunkte eines Objekts, d.h. diejenigen Bildpunkte eines Abstandsbildes, die dem Objekt zugeordnet sind, ermittelt und es wird geprüft, sich die resultierende Folge von Bildpunktverteilungen für das Objekt wenigstens näherungsweise periodisch ändert. Dabei sind Abweichungen vom periodischen Verhalten zugelassen, die dadurch auftreten, dass Menschen, insbesondere im Verkehr, nicht vollkommen gleichmäßig gehen, sondern kleine Änderungen in der Schrittdauer auftreten können.

Hierdurch wird zu einem eine klare Unterscheidung von kleinen, sich bewegenden Gegenständen ermöglicht, die keine Fußgänger sind und daher auch keine sich periodisch ändernde Bildpunktverteilung aufweisen.

Zum anderen können in Entfernungsbildern auch Bewegungen der Beine von Fußgängern erfasst werden, die sich in radialer Richtung relativ zu dem Sensor bewegen, d.h. auf ihn zukommen oder von ihm weggehen. Eine solche Unterscheidung ist einfachen Videobildern meist nicht möglich.

Zum anderen ist das Verfahren auch unter ungünstigen Umständen einsetzbar, da in der Regel in Abstandsbildern Gegenstände und damit insbesondere Fußgänger einfach von einem etwas entfernten Hintergrund unterschieden werden können.

Bevorzugte Weiterbildungen der Erfindung sind in den Unteransprüchen, der Beschreibung und der Zeichnung beschrieben.

Geht ein Fußgänger, so wird die periodische Bewegung der Beine von einer Bewegung des Fußgängers überlagert. Unter einer periodischen Änderung der Verteilung wird daher im Rahmen der Erfindung auch verstanden, dass die Verteilungen sich insgesamt noch bewegen können. Um die Analyse der Verteilungen zu erleichtern, ist es bevorzugt, dass vor der Prüfung, ob sich die Bildpunktverteilung als Funktion der Zeit wenigstens näherungsweise periodisch ändert, eine Transformation der Bildpunkte in ein mit dem Objekt mitbewegtes Koordinatensystem durchgeführt wird. Die Transformation ist dabei in jedem Zyklus durchzuführen, da sich die Geschwindigkeit in jedem Zyklus ändern kann. Als Geschwindigkeit kann insbesondere die von der Objektverfolgung ermittelte Geschwindigkeit des Objekts in dem jeweiligen Zyklus verwendet werden. Besonders bevorzugt ist es, dass die dem Objekt zugeordneten Bildpunkte in ein mit dem Objekt mitbewegtes Koordinatensystem transformiert werden, dessen Ursprung in dem Schwerpunkt der Bildpunkte des Objekts liegt. In diesem Fall kann die periodische Änderung der Verteilung als eine um den Ursprung oszillierende Bewegung aufgefasst werden, was die Auswertung erleichtern kann.

Prinzipiell genügt es, die zeitliche Änderung der gesamten Bildpunktverteilung für ein Objekt zu untersuchen. Um eine bessere und vor allem mit geringerem Aufwand verbundene Erkennung zu erreichen, werden zur Ermittlung der periodischen Änderung der Bildpunktverteilung wenigstens einige der dem Objekt zugeordneten Bildpunkte in zwei Mengen eingeteilt, deren Bildpunkte jeweils einem Bein entsprechen könnten. Bevorzugt wird dann die Bewegung nur eines Beins verwendet, vorzugsweise die des dem Sensor zugewandten Beins.

Prinzipiell können diese Mengen auf beliebige Art und Weise erhalten werden. Die Mengen sind dadurch gegeben, dass deren Bildpunkte auf jeweils einer Seite einer durch den Schwerpunkt der Bildpunkte des Objekts parallel zu dessen Geschwindigkeit verlaufenden Achse angeordnet sind. Insbesondere wenn die Achse eine der Koordinatenachsen des Objektkoordinatensystems ist, kann die Einteilung in Mengen sehr einfach allein durch Prüfung des Vorzeichens der entsprechenden Koordinate vorgenommen werden.

Um einfach die zeitliche Änderung der Verteilung untersuchen zu können, ist es bevorzugt, dass für wenigstens eine der Mengen ein Bezugspunkt ermittelt wird, und dass die Bewegung des Bezugspunktes in wenigstens einer Richtung geprüft wird. Es kann also genügen, die Bewegung des Bezugspunktes in nur einer Richtung zu prüfen. Vorzugsweise wird nur die Bewegung des Bezugspunktes parallel zur Bewegungsrichtung des Fußgängers bzw. der Geschwindigkeit des Fußgängers betrachtet. In dieser Richtung ist die Bewegung des Bezugspunkts am ausgeprägtesten.

Als eine Ausführungsform ist es bevorzugt, dass als Bezugspunkt für wenigstens eine der Mengen der geometrische Schwerpunkt der Menge von Bildpunkten verwendet wird. Dieser ist sehr einfach zu bestimmen.

Alternativ ist es bevorzugt, dass als Bezugspunkt für wenigstens eine der Mengen derjenige Bildpunkt der Menge verwendet wird, dessen Abstand vom geometrischen Schwerpunkt des Objekts maximal ist. Ein solcher Bezugspunkt kann größere Bewegungen vollführen als der Schwerpunkt und kann daher eine sicherere Auswertung der Bewegung, insbesondere bei kleinen Schrittweiten eines Fußgängers, erlauben.

Als weitere Alternative ist es bevorzugt, dass als Bezugspunkt für wenigstens eine der Mengen derjenige Bildpunkt der Menge verwendet wird, dessen Abstand von einer in Richtung der Geschwindigkeit des Objekts durch den geometrischen Schwerpunkt desselben verlaufenden Achse maximal ist. Ein solcher Bezugspunkt ist der am weitesten außen in Bezug auf die Bewegungsrichtung des Fußgängers liegende Punkt und wird daher ähnlich wie der auf dem Abstand vom Schwerpunkt basierende Bezugspunkt große Bewegungsamplituden bilden. Er ist jedoch schneller ermittelbar, da er bereits bei der Einteilung in die beiden Mengen unter Verwendung des oben genannten Objektkoordinatensystem und der Einteilung in Mengen gemäß der Lage in Bezug auf die Achse in Richtung der Geschwindigkeit einfach durch einen Vergleich ohne weitere Rechenoperationen ermittelbar sein kann.

Liegt eine zeitliche Folge von Lagen des Bezugspunkts vor, muss geprüft werden, ob dieser eine näherungsweise periodische Bewegung ausführt. Dazu ist es nach einer ersten Alternative bevorzugt, dass zur Prüfung auf eine periodische Veränderung der Verteilung der dem Objekt zugeordneten Bildpunkte geprüft wird, welchen zeitlichen Abstand aufeinander folgende Umkehrpunkte der Bewegung wenigstens eines der Bezugspunkte in wenigstens einer Richtung aufweisen. Die Umkehrpunkte der Bewegung sind dadurch gekennzeichnet, dass die Lage des Bezugspunktes sich einem Extremwert in der gegebenen Richtung, vorzugsweise der Richtung der Geschwindigkeit des Objekts, zunächst annähert und sich dann davon wieder entfernt. Eine solche Prüfung ist sehr einfach durchführbar.

Alternativ ist es bevorzugt, dass zur Prüfung auf eine periodische Veränderung der Verteilung der dem Objekt zugeordneten Bildpunkte geprüft wird, welchen zeitlichen Abstand aufeinander folgende Durchgänge wenigstens eines der Bezugspunkte durch eine mittlere Lage seiner Bewegung in wenigstens einer Richtung aufweisen. Liegt das Objektkoordinatensystem mit seinem Ursprung im Schwerpunkt des Objekts, kann der Durchgang durch die mittlere Lage, d.h. das Langzeitmittel der Lagen, einem Nulldurchgang für die Bewegungskomponente parallel zur Bewegungsrichtung des Fußgängers entsprechen. Dieser ist einfach zu ermitteln.

Bei den beiden zuletzt geschilderten Alternativen ist es bevorzugt, dass wenigstens die Komponente der Bewegung des Bezugspunkts, die zur Prüfung verwendet wird, einer Tiefpassfilterung unterzogen wird, um kurzfristige Schwankungen, die die Ermittlung des Umkehrpunktes oder des Durchgangs durch die mittlere Lage beeinträchtigen könnten, zu unterdrücken. Weiterhin können auch Ausgleichsfunktionen verwendet werden, die näherungsweise die ermittelten Lagen als Funktion einer Zyklusnummer bzw. Zeit wiedergeben.

Bei der Prüfung, ob eine Periodizität vorliegt, können beispielsweise heuristisch erhaltene Kriterien verwendet. Vorzugsweise werden jedoch der Mittelwert der zeitlichen Abstände und insbesondere auch ein Maß für die Schwankungen um den Mittelwert ermittelt, wozu eine vorgegebene Mindestanzahl von Zeitabständen zwischen Nulldurchgängen bzw. Umkehrpunkten verwendet werden kann. Ist das Schwankungsmaß im Verhältnis zu dem Mittelwert zu groß, ist nicht von einer periodischen Bewegung auszugehen. Vorzugsweise ist das Verhältnis kleiner als 1, vorzugsweise kleiner als 0,5. Die Mindestanzahl kann beispielsweise größer oder gleich 3 sein.

Es ist jedoch besonders bevorzugt, dass eine Fourier-Analyse der zeitlichen Bewegung wenigstens eines der Bezugspunkte durchgeführt wird. Hierzu kann insbesondere eine schnelle diskrete Fourier-Transformation durchgeführt werden ("Fast Fourier Transform"), was eine schnelle Auswertung erlaubt. Überraschenderweise arbeitet dieses Verfahren schon bei einer sehr geringen Anzahl von Schritten sehr zuverlässig. Eine Erkennung eines Fußgängers setzt voraus, dass in dem entstehenden Spektrum im Bereich der zu erwartenden Schrittfrequenzen nur ein dominantes Maximum auftritt.

Um eine weitere Absicherung zu erhalten, dass ein Objekt mit sich periodisch verändernder Bildpunktverteilung tatsächlich einen Fußgänger darstellt, ist es bevorzugt, dass das Objekt als Fußgänger erkannt wird, wenn eine wenigstens näherungsweise ermittelte Frequenz der zeitlichen Änderung der Verteilung zwischen 0,2 Hertz und 3 Hertz, vorzugsweise zwischen 0,5 Hertz und 2,5 Hertz, liegt. Bei Verwendung eines Bezugspunktes wird die Frequenz von dessen Bewegung geprüft.

Als weitere oder alternative Prüfung kann mittels eines Pendelmodells für ein typisches Bein geprüft werden, ob bei der ermittelten Frequenz und einer gewöhnlichen Schrittweite die Geschwindigkeit des Objekts erreicht werden kann.

Weiterhin ist es bevorzugt, dass Abstandsbilder in mehreren Ebenen oder Flächen verwendet werden, und dass zusätzlich Korrelationen zwischen der zeitlichen Änderung der Verteilung der Bildpunkte in den Ebenen oder Fläche ermittelt werden. Hierdurch können gegebenenfalls trennschärfere Ergebnisse erhalten werden, wobei jedoch die dem Boden am nächsten liegende Ebene die besten Resultate ergeben sollte.

Weiterer Gegenstand der Erfindung ist ein Computerprogramm mit Programmcode-Mitteln, um das erfindungsgemäße Verfahren durchzuführen, wenn das Programm auf einen Computer ausgeführt wird. Unter einem Computer wird dabei jede Datenverarbeitungseinrichtung verstanden, die insbesondere einen Prozessor, einen Speicher und Schnittstellen zur Zuführung bzw. zur Abgabe von Daten aufweist. Insbesondere kann der Computer einen digitalen Signalprozessor aufweisen.

Weiterhin ist Gegenstand der vorliegenden Erfindung ein Computerprogrammprodukt mit Programmcode-Mitteln, die auf einem computerlesbaren Datenträger gespeichert sind, um das erfindungsgemäße Verfahren durchzuführen, wenn das Computerprogramm auf einem Computer ausgeführt wird. Bei dem Datenträger kann es sich insbesondere um nichtflüchtige Speicher in Form von entsprechenden Halbleiterbauelementen, CDs, DVDs oder aus Disketten handeln.

Darüber hinaus ist Gegenstand der vorliegenden Erfindung eine Vorrichtung zur Erkennung und Verfolgung von Objekten mit mindestens einem optoelektronischen Sensor, vorzugsweise einem Laserscanner, dessen Sichtbereich den Erfassungsbereich einschließt, und einer mit dem optoelektronischen Sensor verbundenen Datenverarbeitungseinrichtung nach Anspruch 14.

Diese Datenverarbeitungseinrichtung kann insbesondere Objektverfolgungsmittel zur Verfolgung von Objekten auf der Basis erfasster Abstandsbilder, Erfassungsmittel zur Erfassung von einer Verteilung von einem Objekt zugeordneten Bildpunkten und Prüfmittel zur Prüfung, ob sich die Verteilungen der ermittelten zeitliche Folge von Bildpunktverteilungen periodisch ändert, umfassen.

Die Erfindung eignet sich insbesondere zum Einsatz zur Überwachung eines Bereichs vor einem Fahrzeug, das mit einer erfindungsgemäßen Vorrichtung ausgestattet ist.

Die Erfindung wird nun weiter beispielhaft anhand der Zeichnung erläutert. Es zeigen:
- Fig. 1: eine schematische Draufsicht auf eine Szene mit einem Fahrzeug, an dem ein Laserscanner angebracht ist, einem weiteren Fahrzeug und einem Fußgänger im Erfassungsbereich des Laserscanners,
- Fig. 2: ein Ablaufdiagramm eines Verfahrens zur Fußgängererkennung nach einer ersten bevorzugten Ausführungsform der Erfindung,
- Fig. 3: ein Ablaufdiagramm einer Fußgängererkennung in dem Verfahren in Fig. 2,
- Fig. 4: eine zeitliche Folge von Verteilungen von Bildpunkten für einen gehenden Fußgänger,
- Fig. 5: eine schematische Darstellung von Bildpunkten für einen Fußgänger in einem Sensor- und einem Objektkoordinatensystem LS bzw. F,
- Fig. 6: ein Diagramm, das die Abhängigkeit einer x^{F}-Komponente einer Lage eines Bezugspunktes, der über Abstandsbeträge von einem geometrischen Schwerpunkt des Objekts bestimmt ist, von der Zyklusnummer bzw. der Zeit veranschaulicht, wobei die Komponente die Komponente der Lage in einem Objektkoordinatensystem und entlang einer Bewegungsrichtung des Objekts ist,
- Fig. 7: ein Diagramm, das die Abhängigkeit einer x^{F}-Komponente einer Lage eines Bezugspunktes, der über den maximalen Abstand von der Achse des Objektkoordinatensystems in Bewegungsrichtung bestimmt ist, von der Zyklusnummer bzw. der Zeit veranschaulicht, wobei die Komponente die Komponente der Lage in einem Objektkoordinatensystem und entlang einer Bewegungsrichtung des Objekts ist, und
- Fig. 8: ein Fourier-Spektrum einer Lagefunktion, die die Abhängigkeit einer Komponente einer Lage eines über Abstandsbeträge von Schwerpunkt des Objekts bestimmten Bezugspunktes von der Zyklusnummer bzw. der Zeit wiedergibt, wobei die Komponente die Komponente der Lage in einem Objektkoordinatensystem und entlang einer Bewegungsrichtung des Objekts ist.

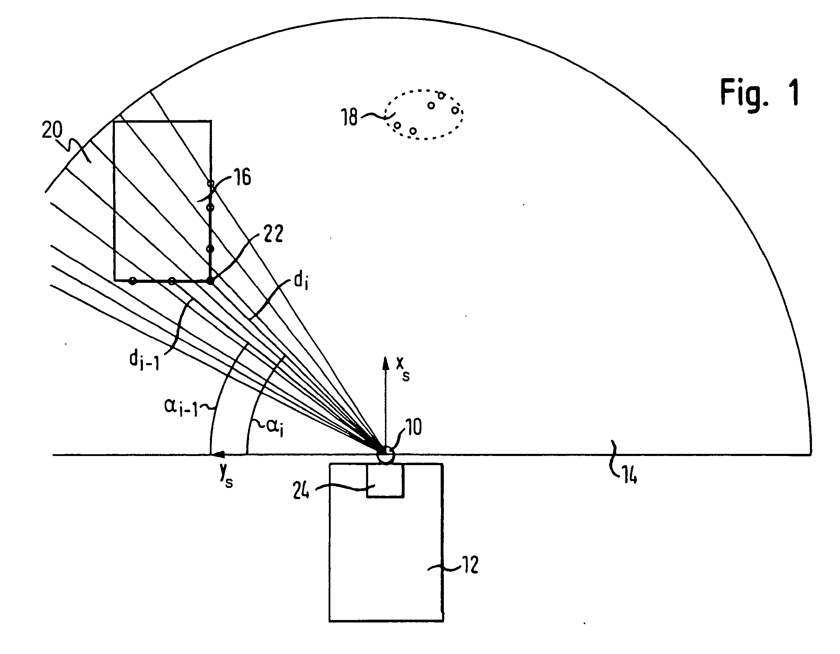

In Fig. 1 ist ein Laserscanner 10 an der Frontseite eines Fahrzeugs 12 gehalten, um Gegenstände vor dem Fahrzeug 12 zu erfassen. Der Laserscanner 10 weist einen in Fig. 1 nur teilweise gezeigten, einen Überwachungsbereich darstellenden Erfassungsbereich 14 auf, der aufgrund der Lage symmetrisch zur Längsachse des Fahrzeugs 12 einen Winkel von etwa 180° abdeckt. Der Erfassungsbereich 14 ist in Fig. 1 nur schematisch und zur besseren Darstellung insbesondere in radialer Richtung zu klein dargestellt. In dem Erfassungsbereich 14 befinden sich beispielhaft zwei sich relativ zu dem Fahrzeug 12 bewegende Gegenstände 16 und 18, bei denen es sich um Fahrzeuge handelt.

Der Laserscanner 10 tastet seinen Erfassungsbereich 14 in einer Abtastebene in grundsätzlich bekannter Weise mit einem mit konstanter Winkelgeschwindigkeit geschwenkten, gepulsten Laserstrahlungsbündel 20 ab, wobei ebenfalls umlaufend in konstanten Zeitabständen T zu Zeiten τᵢ in festen Winkelbereichen um einen mittleren Winkel αᵢ detektiert wird, ob das Laserstrahlungsbündel 20 von einem Punkt bzw. Bereich eines Gegenstands zurückgeworfen wird. Der Index i läuft dabei von 1 bis zur Anzahl der Winkelbereiche im Erfassungsbereich. Von diesen Winkelbereichen sind in Fig. 1 nur einzelne gezeigt, u. a. die den mittleren Winkeln αᵢ₋₁ und αᵢ zugeordneten Winkelbereiche. Hierbei sind die Winkelbereiche zur deutlicheren Darstellung wiederum übertrieben groß gezeigt. Anhand der Laufzeit des Laserstrahlpulses wird der Sensorabstand dᵢ des jeweils erfassten Gegenstandpunktes von dem Laserscanner 10 ermittelt. Der Laserscanner 10 erfasst daher in seinem xₛ - yₛ - Koordinatensystem als Koordinaten in einem Rohdatenelement für einen Gegenstandspunkt 22 auf der Oberfläche des Gegenstands 16 den Winkel αᵢ und den bei diesem Winkel festgestellten Abstand dᵢ, d.h. die Position des Gegenstandspunktes 22 in Polarkoordinaten relativ zu dem Fahrzeug 12. Bei einer Abtastung des Erfassungsbereichs 14 werden von dem Laserscanner 10 somit geordnet nach aufsteigenden Polarwinkeln Rohdatenelemente mit Koordinaten (αᵢ, dᵢ) bereitgestellt, wobei i eine natürliche Zahl zwischen 1 und der Anzahl der von dem Laserscanner 10 erfassten Rohdatenelemente ist. Die Menge der bei einer Abtastung erfassten Rohdatenelemente bzw. daraus, gegebenenfalls nach Korrektur der Daten und/oder Transformation in ein anderes Koordinatensystem, erhaltenen Entfernungsbildpunkte, im Folgenden einfach als Bildpunkte bezeichnet, bildet ein Abstandsbild im Sinne der Erfindung. Die Bildpunkte werden dabei in der Reihenfolge der Erfassung, d.h. zunehmender Polarwinkel abgespeichert.

Der Laserscanner 10 tastet seinen Erfassungsbereich 14 jeweils in aufeinander folgenden Abtastungen mit gleichem Zeitabstand T ab, so dass eine zeitliche Folge von Abtastungen und damit Abstandsbildern entsteht.

Zur Verarbeitung der Rohdatenelemente bzw. Entfernungsbildpunkte weist der Laserscanner 10 eine Auswerteelektronik bzw. Datenverarbeitungseinrichtung 24 auf, die im Beispiel in dem Laserscanner 10 angeordnet ist, grundsätzlich aber auch davon abgesetzt angeordnet sein kann. Die Datenverarbeitungseinrichtung 24 weist u. a. einen zur Ausführung eines Verfahrens nach einer bevorzugten Ausführungsform der Erfindung programmierten digitalen Signalprozessor, eine mit dem digitalen Signalprozessor verbundene Speichereinrichtung sowie Schnittstellen zur Ausgabe von Daten an eine in den Figuren nicht gezeigte Fahrzeugsteuerung auf.

Bei einem Verfahren zur Erkennung eines Fußgängers nach einer ersten bevorzugten Ausführungsform wird das in der am 28. September 2001 angemeldeten deutschen Patentanmeldung DE 101 48 071 A1 beschriebene Objektverfolgungsverfahren verwendet. Der Inhalt der Patentanmeldung DE 101 48 071 A1 wird daher hiermit durch Bezugnahme in die Beschreibung aufgenommen.

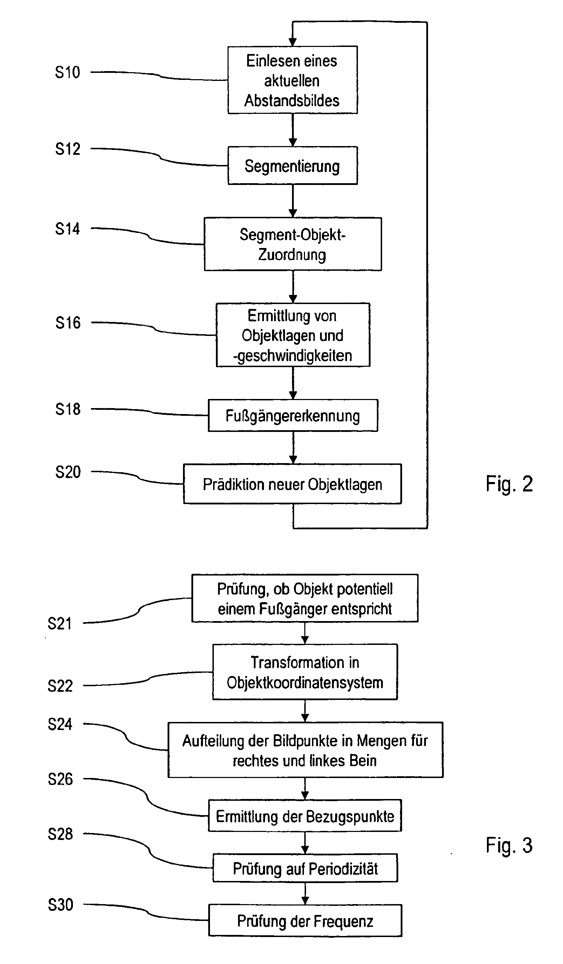

Da es auf die Details des Verfahrens nicht ankommt, wird es hier nur summarisch zusammengefasst unter Bezugsnahme auf Fig. 2 beschrieben.

Das Verfahren arbeitet zyklisch und verwendet zur Objektverfolgung einen Kalman-Filter. Darüber hinaus erfolgt eine Klassifizierung der erkannten Objekte auf der Basis der Größe und Geschwindigkeit der Objekte. Eine der Klassen betrifft Fußgänger, die jedoch nicht von anderen in der Erfassungsebene ähnlich großen, sich ähnlich schnell bewegenden Objekten unterschieden werden können und damit im Sinne der Erfindung zunächst nur als potentielle Fußgänger aufzufassen sind.

Nach dem Einlesen eines aktuellen Abstandsbildes, das in der Patentanmeldung DE 101 48 071 A1 als tiefenaufgelöstes Bild bezeichnet wird, in Schritt S10, wird in Schritt S12 eine Segmentierung des Abstandsbildes durchgeführt, bei der Bildpunkte zu Segmenten zusammengefasst werden. Dabei gehört ein Bildpunkt zu einem Segment, wenn er zu mindestens einem anderen Bildpunkt des Segments einen Abstand hat, der kleiner ist als ein vorgegebener Höchstabstand. Die Bildung von Segmenten und insbesondere die Wahl von Abstandskriterien kann dabei unter Verwendung eines euklidischen Abstandes, bei dem gegebenenfalls die Differenzen zwischen den Koordinaten des Bildpunktes in Richtung der Fahrtrichtung geringer gewichtet werden als quer zur Fahrtrichtung, oder zweier Abstände jeweils in einer der Koordinatenrichtungen eines gegebenen Koordinatensystems, beispielsweise eines kartesischen Koordinatensystems oder eines Polarkoordinatensystems, erfolgen.

In Schritt S14 werden dann den Objekten Segmente zugeordnet, wobei im letzten Zyklus prädizierte Lagen der Objekte benutzt werden. Dabei wird gespeichert, welche Segmente und damit welche Bildpunkte welchen Objekten zugeordnet sind.

In Schritt S16 werden auf der Basis der zugeordneten Segmente unter Verwendung eines Kalman-Filters Objektlagen und -geschwindigkeiten ermittelt.

Schritt S18 ist spezifisch für das erfindungsgemäße Verfahren. In diesem im Folgenden näher erläuterten Schritt erfolgt eine Fußgängererkennung.

In Schritt S20 schließlich werden mittels entsprechender Gleichungen für Kalman-Filter neue prädizierte Lagen und Geschwindigkeiten der Objekte ermittelt.

Das Verfahren wird dann mit Schritt S10 fortgesetzt.

Die Teilschritte der Fußgängererkennung in Schritt S18 sind in Fig. 3 schematisch dargestellt.

Die folgenden Schritte werden für alle Objekte durchgeführt.

Zunächst werden in Schritt S21 potentiell Fußgängern entsprechende Objekte anhand der Größe und Geschwindigkeit von anderen Objekten unterschieden.

Die folgenden Schritte werden nur für Objekte durchgeführt, die gemäß Schritt S21 potentiell Fußgängern entsprechen.

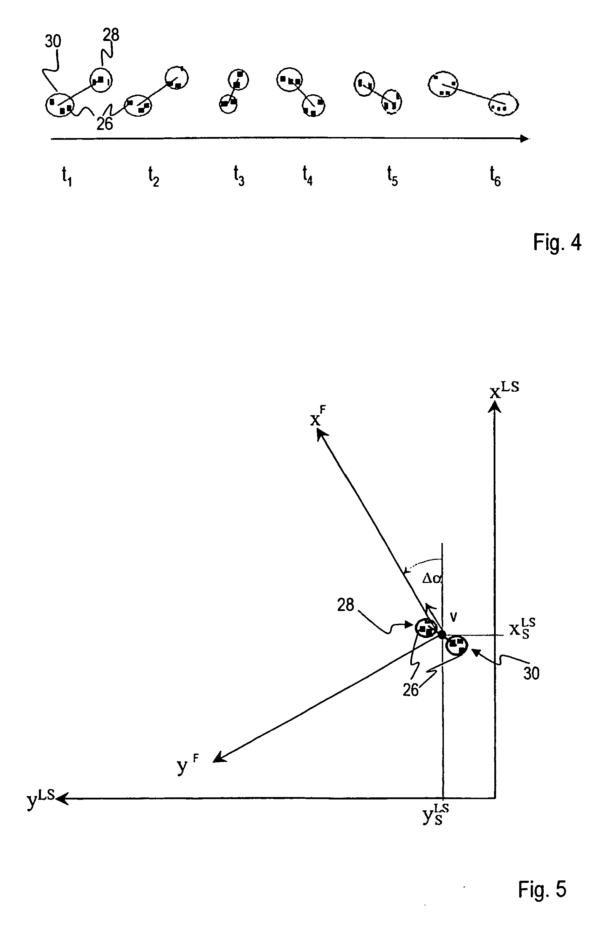

Zur Erkennung der Fußgänger wird ausgenutzt, dass entsprechende Objekte eine Verteilung von Bildpunkten 26 aufweisen, die sich zeitlich periodisch ändert, wie in Fig. 4 für eine halbe Periode schematisch gezeigt. Darin sind Bildpunkte 26 eines Objekts zu aufeinander folgenden Zeiten t₁ bis t₆ gezeigt, die sich meist in zwei durch Kreise gekennzeichnete Mengen 26 und 28 gruppieren, die Beinen einer Person entsprechen.

Zunächst erfolgt in Schritt S22 eine Transformation der Bildpunkte aus dem kartesischen x^{LS}-y^{LS}-Sensorkoordinatensystem in ein kartesisches x^{F}-y^{F}-Objektkoordinatensystem, wozu die in dem aktuellen Zyklus in Schritt S16 ermittelte Schätzung für die Objektgeschwindigkeit verwendet wird. Das Objektkoordinatensystem wird so gelegt, dass dessen Ursprung in dem geometrischen Schwerpunkt der Bildpunkte des Objekts liegt und die x^{F}-Achse des Objekt-Koordinatensystems in Richtung der Geschwindigkeit v des Objekts gerichtet ist. Dazu ist gegebenenfalls eine Drehung des Koordinatensystems um einen Winkel Δα notwendig (vgl. Fig. 5).

In Schritt S24 werden dann die Bildpunkte in zwei Mengen 28 bzw. 30 für das linke bzw. das rechte Bein aufgeteilt (vgl. Fig. 5). Da sich der Fußgänger typischerweise quer zur Richtung seines Beckens und damit entlang der x^{F}-Achse bewegt, entsprechen Bildpunkte mit negativer y^{F}-Komponente dem linken und solche mit positiver y^{F}-Komponente dem rechten Bein.

In Schritt S26 werden schließlich Bezugspunkte für die Mengen, d.h. die Beine ermittelt. Im vorliegenden Beispiel wird hierzu in jeder der Mengen derjenige Bildpunkt ermittelt, der von dem geometrischen Schwerpunkt des Objekts den maximalen quadratischen Abstand aufweist.

Von den so ermittelten Lagen der Bezugspunkte werden die x^{F}-Komponenten unter Zuordnung zu dem jeweiligen Zyklus beispielsweise in einer Liste abgespeichert. Es entstehen so während der Lebensdauer des Objekts zwei zeitliche Folgen von x^{F}-Komponenten bzw. Lagen der jeweiligen Bezugspunkte, die die zeitliche Veränderung der Verteilungen der dem jeweiligen Objekt zugeordneten Bildpunkte wiedergeben. Diese Folgen können als eine Lagefunktion aufgefasst werden, die die x^{F}-Komponenten in Abhängigkeit von der Zyklusnummer wiedergibt. Die Folge hat eine vorgegebene maximale Länge bzw. Anzahl von Komponentenwerten M, so dass bei Überschreiten der Länge die ältesten Werte gelöscht werden.

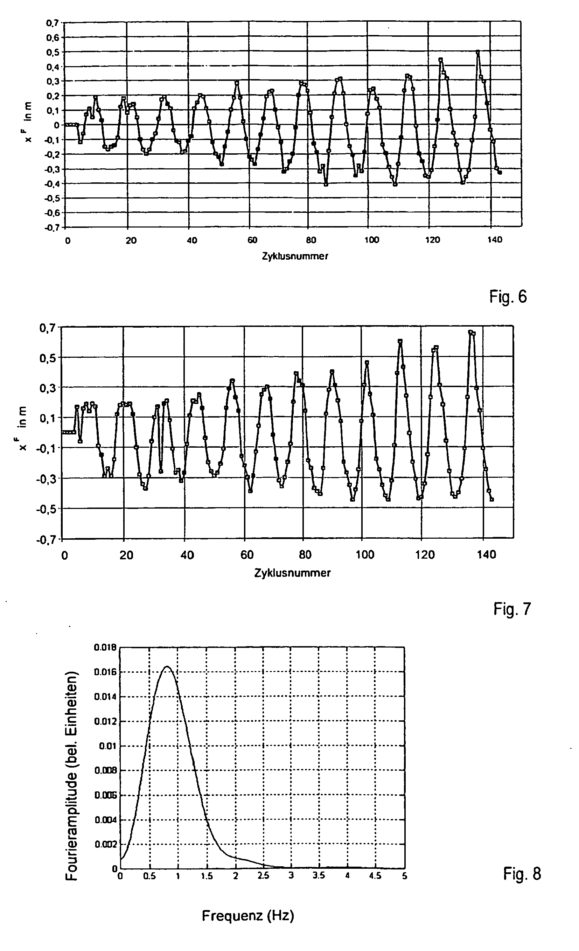

Eine entstehende Folge ist beispielhaft in Fig. 6 gezeigt. Es sind näherungsweise periodische Änderungen der Lage des Bezugspunkts in x^{F}-Richtung zu erkennen, die einer harmonischen Schwingung um die Nulllinie nahe kommen.

In Schritt S28 wird zunächst für alle noch nicht eindeutig als Fußgänger erkannten Objekte, die potentiell Fußgängern entsprechen, überprüft, ob die gespeicherte Folge von Bezugspunkten eine vorgegebene Mindestlänge bzw. Mindestanzahl aufweist, die dadurch gegeben ist, dass sie eine Prüfung, ob eine periodische Bewegung vorliegt, und diesem Fall weiter eine Bestimmung der Frequenz der periodischen Bewegung erlaubt.

Danach werden zur Prüfung auf Periodizität in Schritt S28 sowohl für den rechten als auch den linken Bezugspunkt bzw. deren x^{F}-Komponenten Umkehrpunkte der Bewegung des jeweiligen Bezugspunktes ermittelt, die sich als Extrema der Lagefunktion ergeben. In anderen Varianten des Verfahrens wird nur der Bezugspunkt untersucht, der näher zu dem Laserscanner 10 ist als der andere.

Genauer wird der zeitliche Abstand zwischen in Bewegungsrichtung des Objekts vorderen und hinteren Bewegungsumkehrpunkt des Bezugspunktes bestimmt.

Ein hinterer Umkehrpunkt, der einem Minimum der x^{F}- Lagefunktion des jeweiligen Bezugspunktes entspricht, wird bei Erfüllung der folgenden Bedingungen festgestellt: Die Änderung des Wertes der x^{F}-Komponente ist im aktuellen Zyklus positiv, während sie im vorhergehenden Zyklus 0 oder negativ war, und der Wert selbst ist negativ. Weiterhin sollte, wenn es sich nicht um den ersten Umkehrpunkt handelt, der letzte ermittelte Umkehrpunkt ein vorderer Umkehrpunkt sein. Darüber hinaus muss seit diesem vorderen Umkehrpunkt ein Zeitintervall von mindestens 0,2 s vergangen. Die letzte Bedingung entspricht einem Tiefpassfilter, der dazu dient, Messfehler bzw. Schwankungen, die zu Schrittdauern kleiner als 0,2 s Schrittdauer führen und daher Ausreißer darstellen, nicht mit einzubeziehen, da eine solche Schrittdauer für einen Fußgänger ausgeschlossen werden kann.

Eine analoge Prüfung erfolgt für einen vorderen Umkehrpunkt, der einem Maximum der Abhängigkeit der x^{F}-Komponente von der Zykluszahl entspricht.

Es wird nun eine statistische Analyse der zeitlichen Abstände der aufeinander folgenden Umkehrpunkte durchgeführt, bei der ein Mittelwert und eine Standardabweichung ermittelt werden.

Es wird dann überprüft, ob eine periodische Bewegung vorliegt. Dazu wird der dimensionslose Quotient aus Standardabweichung und Mittelwert gebildet. Ist der Quotient kleiner als 0,5, so wird eine periodische Bewegung angenommen, andernfalls nicht. In dem letzten Fall wird das Objekt als "Nicht-Fußgänger" gekennzeichnet und es wird ihm eine andere Objektklasse zugewiesen, wenn die Anzahl der Werte der Bezugspunktkomponenten in der Folge die maximale Anzahl erreicht hat.

Der doppelte Mittelwert entspricht gerade dem Kehrwert der Frequenz, wenn eine periodische Bewegung vorliegt. Es wird daher in Schritt S30 geprüft, ob der Kehrwert des doppelten Mittelwertes zwischen 0,5 und 2,5 Hz liegt. Ist dies der Fall wird das Objekt als "eindeutig erkannter Fußgänger" gekennzeichnet, wenn die Anzahl der Werte der Bezugspunktkomponenten in der Folge die maximale Anzahl erreicht hat.

Auf diese Weise werden spätestens nach Ablauf einer Anzahl von Zyklen, die der oben genannten Maximalzahl entspricht, eindeutig festgestellt, ob ein Objekt der Klasse Fußgänger bzw. ein potentiell einem Fußgänger entsprechendes Objekt auch tatsächlich einem Fußgänger entspricht.

Bei einem Verfahren nach einer zweiten bevorzugten Ausführungsform der Erfindung ist Schritt S26 dahingehend geändert, dass als Bezugspunkt für die dem linken Bein entsprechende Menge 28 derjenige Bildpunkt verwendet wird, dessen y^{F}-Komponente minimal ist, und dass als Bezugspunkt für die dem rechten Bein entsprechende Menge 30 derjenige Bildpunkt verwendet wird, dessen y^{F}-Komponente maximal ist. Bei Verwendung dieses Kriteriums ergibt sich beispielsweise die in Fig. 7 gezeigte Lagefunktion, die sich nicht wesentlich von der in Fig. 6 unterscheidet.

Weiterhin ist Schritt S28 dahingehend geändert, dass zur Prüfung auf das Vorliegen einer Periodizität nicht die Umkehrpunkte ermittelt werden, sondern die Nulldurchgänge, d.h. die Durchgänge durch den zeitlichen Mittelwert über mehrere Perioden.

Auch hier werden Nulldurchgänge bei Rückwärtsbewegung des Beins und solche bei einer Vorwärtsbewegung des Beins unterschieden. Für einen Nulldurchgang bei Rückwärtsbewegung sind folgende Bedingungen zu erfüllen: Die Änderung der Lagefunktion ist negativ und die Lagefunktion hat einen negativen Wert, während sie im vorhergehenden Zyklus einen positiven Wert hatte. Weiterhin sollte, wenn es sich nicht um den ersten Nulldurchgang handelt, der letzte ermittelte Nulldurchgang ein Nulldurchgang bei Vorwärtsbewegung gewesen sein. Weiterhin muss seit diesem letzten Nulldurchgang ein Zeitintervall von mindestens 0,2 s vergangen. Die letzte Bedingung entspricht einem Tiefpassfilter, der dazu dient, Messfehler bzw. Schwankungen, die zu Schrittdauern kleiner als 0,2 s Schrittdauer führen und daher Ausreißer darstellen, nicht mit einzubeziehen, da eine solche Schrittdauer für einen Fußgänger ausgeschlossen werden kann. Analoge Bedingungen gelten zur Feststellung eines Nulldurchgangs bei Vorwärtsbewegung.

Die anderen Schritte bleiben unverändert.

Ein Verfahren nach einer dritten bevorzugten Ausführungsform der Erfindung unterscheidet sich von dem Verfahren des ersten Ausführungsbeispiels in den Schritten S28 und S30.

In dem S28 entsprechenden Schritt wird zur Prüfung auf Periodizität eine schnelle diskrete Fourier-Transformation (FFT) der Lagefunktion durchgeführt. Beispielsweise kann sich dabei das in Fig. 7 gezeigte Spektrum ergeben, das einen ausgeprägten Peak bei etwa 0,8 Hertz zeigt, während bei benachbarten Frequenzen keine vergleichbaren Maxima zu erkennen sind. Das Vorliegen eines solchen Peaks wird als Zeichen für eine Periodizität angenommen. Genauer wird eine Periodizität angenommen, wenn das Maximum des höchsten Peaks wenigstens um einen Faktor von im Beispiel 3 größer ist als der nächst kleinere Peak im Bereich zwischen 0 und 10 Hz. Wird keine Periodizität festgestellt, wird wie im ersten Ausführungsbeispiel weiter verfahren.

In dem Schritt S30 entsprechenden Schritt wird zu Feststellung der Frequenz nun die Lage des höchsten Peaks ermittelt. Ansonsten wird wie im ersten Ausführungsbeispiel verfahren.

Bei einer weiteren bevorzugten Ausführungsform der Erfindung wird ein Laserscanner verwendet, der Abtastungen in vier Abtastebenen durchführt. Bei der Auswertung werden die Bildpunkte in den vier Ebenen auf eine gemeinsame Ebene projiziert und das so erhaltene Abstandsbild wird wie zuvor geschildert weiterverarbeitet.

Bei noch einer weiteren Ausführungsform der Erfindung, bei der ebenfalls ein Laserscanner verwendet wird, der Abtastungen in vier Abtastebenen durchführt und damit in einem Zyklus vier Abstandsbilder liefert, werden die Bildpunktverteilungen in den Abtastebenen separat gebildet und die zeitlichen Entwicklungen der Bildpunktverteilungen in den Abtastebenen miteinander korreliert.

### Bezugszeichenliste

- 10: Laserscanner
- 12: Fahrzeug
- 14: Erfassungsbereich
- 16: Gegenstand
- 18: Gegenstand
- 20: Laserstrahlbündel
- 22: Gegenstandspunkt
- 24: Datenverarbeitungseinrichtung
- 26: Bildpunkte
- 28: Menge für linkes Bein
- 30: Menge für rechtes Bein

## Patentansprüche

1. Verfahren zur Erkennung von Fußgängern (18) auf der Basis von in zeitlicher Folge von wenigstens einem Sensor (10) für elektromagnetische Strahlung, insbesondere einem Laserscanner, erfassten Abstandsbildern eines Erfassungsbereichs (14) des Sensors (10), bei dem in aufeinander folgenden Zyklen
eine Objektverfolgung von Objekten, die von dem Sensor erfassten Gegenständen (16, 18) in dem Erfassungsbereich (14) entsprechen, durchgeführt wird, wobei für wenigstens ein Objekt (18) in mehreren aufeinander folgenden Zyklen Verteilungen von dem Objekt in den jeweiligen Zyklen zugeordneten Bildpunkten (26) ermittelt werden,
**dadurch gekennzeichnet,**
**dass** geprüft wird, ob sich die Bildpunktverteilungen für das Objekt (18) als Funktion der Zeit wenigstens näherungsweise periodisch ändern,
**dass** zur Ermittlung der periodischen Änderung der Bildpunktverteilung wenigstens einige der dem Objekt (18) zugeordneten Bildpunkte (26) in zwei Mengen (28, 30) eingeteilt werden, deren Bildpunkte (26) jeweils einem Bein entsprechen könnten, und
**dass** die Mengen (28, 30) **dadurch** gegeben sind, dass deren Bildpunkte (26) auf jeweils einer Seite einer durch den Schwerpunkt der Bildpunkte (26) des Objekts (18) parallel zu dessen Geschwindigkeit verlaufenden Achse angeordnet sind.

2. Verfahren nach Anspruch 1,
**dadurch gekennzeichnet,**
**dass** vor der Prüfung, ob sich die Bildpunktverteilung als Funktion der Zeit wenigstens näherungsweise periodisch ändert, eine Transformation der Bildpunkte (26) in ein mit dem Objekt mitbewegtes Koordinatensystem durchgeführt wird.

3. Verfahren nach einem der vorhergehenden Ansprüche,
**dadurch gekennzeichnet,**
**dass** für wenigstens eine der Mengen (28, 30) ein Bezugspunkt ermittelt wird, und
**dass** die Bewegung des Bezugspunktes in wenigstens einer Richtung geprüft wird.

4. Verfahren nach Anspruch 3,
**dadurch gekennzeichnet,**
**dass** als Bezugspunkt für wenigstens eine der Mengen der geometrische Schwerpunkt der Menge von Bildpunkten verwendet wird.

5. Verfahren nach Anspruch 3 oder 4,
**dadurch gekennzeichnet,**
**dass** als Bezugspunkt für wenigstens eine der Mengen (28, 30) derjenige Bildpunkt der Menge verwendet wird, dessen Abstand vom geometrischen Schwerpunkt des Objekts (18) maximal ist.

6. Verfahren nach einem der Ansprüche 3 bis 5,
**dadurch gekennzeichnet,**
**dass** als Bezugspunkt für wenigstens eine der Mengen (28, 30) derjenige Bildpunkt der Menge verwendet wird, dessen Abstand von einer in Richtung der Geschwindigkeit des Objekts durch den geometrischen Schwerpunkt desselben verlaufenden Achse maximal ist.

7. Verfahren nach einem der Ansprüche 3 bis 6,
**dadurch gekennzeichnet,**
**dass** zur Prüfung auf eine periodische Veränderung der Verteilung der dem Objekt (18) zugeordneten Bildpunkte (26) geprüft wird, welchen zeitlichen Abstand aufeinander folgende Umkehrpunkte der Bewegung wenigstens eines der Bezugspunkte (26) in wenigstens einer Richtung aufweisen.

8. Verfahren nach einem der Ansprüche 3 bis 7,
**dadurch gekennzeichnet,**
**dass** zur Prüfung auf eine periodische Veränderung der Verteilung der dem Objekt zugeordneten Bildpunkte (26) geprüft wird, welchen zeitlichen Abstand aufeinander folgende Durchgänge wenigstens eines der Bezugspunkte durch eine mittlere Lage seiner Bewegung in wenigstens einer Richtung aufweisen.

9. Verfahren nach einem der Ansprüche 3 bis 8,
**dadurch gekennzeichnet,**
**dass** eine Fourier-Analyse der zeitlichen Bewegung wenigstens eines der Bezugspunkte durchgeführt wird.

10. Verfahren nach einem der vorhergehenden Ansprüche,
**dadurch gekennzeichnet,**
**dass** das Objekt (18) als Fußgänger erkannt wird, wenn eine wenigstens näherungsweise ermittelte Frequenz der zeitlichen Änderung der Verteilung zwischen 0,2 Hertz und 3 Hertz, vorzugsweise 0,5 Hertz und 2,5 Hertz, liegt.

11. Verfahren nach einem der vorhergehenden Ansprüche,
**dadurch gekennzeichnet,**
**dass** Abstandsbilder in mehreren Ebenen oder Flächen verwendet werden, und
**dass** zusätzlich Korrelationen zwischen der zeitlichen Änderung der Verteilung der Bildpunkte in den Ebenen oder Fläche ermittelt werden.

12. Computerprogramm mit Programmcode-Mitteln, um das Verfahren nach einem der Ansprüche 1 bis 11 durchzuführen, wenn das Programm auf einem Computer ausgeführt wird.

13. Computerprogrammprodukt mit Programmcode-Mitteln, die auf einem computerlesbaren Datenträger gespeichert sind, um das Verfahren nach einem der Ansprüche 1 bis 11 durchzuführen, wenn das Computerprogramm auf einem Computer ausgeführt wird.

14. Vorrichtung zur Erkennung und Verfolgung von Objekten mit mindestens einem optoelektronischen Sensor, vorzugsweise einem Laserscanner (10) und einer mit dem optoelektronischen Sensor verbundenen Datenverarbeitungseinrichtung (24), die zur Erkennung von Fußgängern (18) auf der Basis von in zeitlicher Folge von wenigstens einem Sensor (10) für elektromagnetische Strahlung, insbesondere einem Laserscanner, erfassten Abstandsbildern eines Erfassungsbereichs (14) des Sensors (10) ausgebildet ist, mit
Mitteln zur Durchführung einer Objektverfolgung von Objekten, die von dem Sensor erfassten Gegenständen (16, 18) in dem Erfassungsbereich (14) entsprechen, wobei für wenigstens ein Objekt (18) in mehreren aufeinanderfolgenden Zyklen Verteilungen von dem Objekt in den jeweiligen Zyklen zugeordneten Bildpunkten (26) ermittelt werden,
Mitteln zur Prüfung, ob sich die Bildpunktverteilungen als Funktion der Zeit wenigstens näherungsweise periodisch ändern, und
Mitteln zur Einteilung wenigstens einiger der dem Objekt (18) zugeordneten Bildpunkten (26) in zwei Mengen (28, 30), deren Bildpunkte (26) jeweils einem Bein entsprechen könnten, zur Ermittlung der periodischen Änderung der Bildpunktverteilung, wobei die Mengen (28, 30) **dadurch** gegeben sind, dass deren Bildpunkte (26) auf jeweils einer Seite einer durch den Schwerpunkt der Bildpunkte (26) des Objekts (18) parallel zu dessen Geschwindigkeit verlaufenden Achse angeordnet sind.

## Claims

1. A method for the recognition of pedestrians (18) on the basis of distance images from at least one sensor (10) for electromagnetic radiation, in particular from a laser scanner, detected in a time sequence from a detection region (14) of the sensor (10),
wherein in sequential cycles
an object tracking of objects which correspond to real objects (16, 18) detected in the detection region (14) by the sensor is carried out, with distributions of picture elements (26) associated with the object in the respective cycles being determined for at least one object (18) in a plurality of sequential cycles,
**characterised in that**
a check is made whether the picture element distributions for the object (18) change at least approximately periodically as a function of the time;
at least some of the picture elements (26) associated with the object (18) are classified into two sets (28, 30) whose picture elements (26) could each correspond to a leg for the determination of the periodic change of the picture element distribution; and
the sets (28, 30) are given **in that** their picture elements (26) are arranged on a respective side of an axis extending through the centre of gravity of the picture elements (26) of the object (18) parallel to its speed.

2. A method in accordance with claim 1,
**characterised in that**
a transformation of the picture elements (26) into a coordinate system moved with the object is carried out before the check whether the picture element distribution changes at least approximately periodically as a function of the time.

3. A method in accordance with any one of the preceding claims,
**characterised in that**
a reference point is determined for at least one of the sets (28, 30); and
**in that** the movement of the reference point is checked in at least one direction.

4. A method in accordance with claim 3,
**characterised in that**
the geometrical centre of gravity of the set of picture elements is used as the reference point for at least one of the sets.

5. A method in accordance with claim 3 or claim 4,
**characterised in that**,
as the reference point for at least one of the sets (28, 30), that picture element of the set is used whose distance from the geometrical centre of gravity of the object (18) is a maximum distance.

6. A method in accordance with any one of the claims 3 to 5,
**characterised in that**,
as the reference point for at least one of the sets (28, 30), that picture element of the set is used whose distance from an axis extending in the direction of the speed of the object through the geometrical centre of gravity is a maximum distance.

7. A method in accordance with any one of the claims 3 to 6,
**characterised in that**,
to check for a periodical change of the distribution of the picture elements (26) associated with the object (18), a check is made of which time interval sequential reversal points of the movement of at least one of the reference points (26) have in at least one direction.

8. A method in accordance with any one of the claims 3 to 7,
**characterised in that**,
to check for a periodical change of the distribution of the picture elements (26) associated with the object, a check is made of which time interval sequential passages of at least one of the reference points through a middle position of its movement have in at least one direction.

9. A method in accordance with any one of the claims 3 to 8,
**characterised in that**,
a Fourier analysis is made of the time movement of at least one of the reference points.

10. A method in accordance with any one of the preceding claims,
**characterised in that**,
the object (18) is recognised as a pedestrian when an at least approximately determined frequency of the time change of the distribution is between 0.2 Hertz and 3 Hertz, preferably 0.5 Hertz and 2.5 Hertz.

11. A method in accordance with any one of the preceding claims,
**characterised in that**,
distance images in a plurality of plains or areas are used; and
**in that** correlations between the time change of the distribution of the picture elements in the planes or area are additionally determined.

12. A computer program with program code means to carry out the method in accordance with any one of the claims 1 to 13, when the program is installed on a computer.

13. A computer program product with program code means which are stored on a computer readable data carrier to carry out the method in accordance with any one of the claims 1 to 13, when the computer program is installed on a computer.

14. An apparatus for the recognition and tracking of objects having at least one optoelectronic sensor, preferably a laser scanner (10), and a data processing device (24) which is connected to the optoelectronic sensor and which is made for the recognition of pedestrians (18) on the basis of distance images of a detection region (14) of the sensor (10) detected by at least one sensor (10) for electromagnetic radiation, in particular by a laser scanner, comprising
means for carrying out an object tracking of objects which correspond to real objects (16, 18) detected in the detection region (14) by the sensor, with distributions of picture elements (26) associated with the object in the respective cycles being determined for at least one object (18) in a plurality of sequential cycles;
means for checking whether the picture element distributions change at least approximately periodically as a function of the time; and
means for the classification of at least some of the picture elements (26) associated with the object (18) into two sets (28, 30) whose picture elements (26) could each correspond to a leg for the determination of the periodic change of the picture element distribution wherein the sets (28, 30) are given in that their picture elements (26) are arranged on a respective side of an axis extending through the centre of gravity of the picture elements (26) of the object (18) parallel to its speed.

## Revendications

1. Procédé pour la reconnaissance de piétons (8) en se basant sur des images de distances prises en succession temporelle par au moins un capteur (10) pour un rayonnement électromagnétique, en particulier un scanneur à laser, dans une zone de détection (14) du capteur (10), dans lequel, dans des cycles qui se succèdent :
on procède à une poursuite d'objets qui correspondent à des articles (16, 18) détectés par le capteur dans la zone de détection (14), et pour au moins un objet (18) on détermine dans plusieurs cycles qui se succèdent les répartitions de points-images (26) associés à l'objet dans les cycles respectifs, **caractérisé en ce que**
on vérifie si la répartition des points-images pour l'objet (18) varie au moins approximativement périodiquement en fonction du temps,
**en ce que** pour déterminer la variation périodique de la répartition des points-images, on subdivise au moins certains des points-images (26) associés à l'objet (18) en deux groupes (28, 30) dont les points-images (26) pourraient correspondre respectivement à une jambe, et
**en ce que** les groupes (28, 30) sont définis par le fait que leurs points-images (26) sont agencés sur chacun des côtés d'un axe qui s'étend par le barycentre des points-images (26) de l'objet (18) parallèlement à leur vitesse.

2. Procédé selon la revendication 1,
**caractérisé en ce que**, avant la vérification pour savoir si la répartition des points-images varie au moins approximativement périodiquement en fonction du temps, on exécute une transformation des points-images (26) dans un système de coordonnées qui se déplace conjointement avec l'objet.

3. Procédé selon l'une des revendications précédentes,
**caractérisé en ce que** pour l'un des groupes au moins (28, 30) on détermine un point de référence, et
**en ce que** le déplacement du point de référence dans au moins une direction est vérifié.

4. Procédé selon la revendication 3,
**caractérisé en ce que** l'on utilise à titre de point de référence pour l'un au moins des groupes le barycentre géométrique du groupe de points-images.

5. Procédé selon la revendication 3 ou 4,
**caractérisé en ce que** l'on utilise à titre de point de référence pour l'un au moins des groupes (28, 30) celui des points-images du groupe dont la distance vis-à-vis du barycentre géométrique de l'objet (18) est maximale.

6. Procédé selon l'une des revendications 3 à 5,
**caractérisé en ce que** l'on utilise à titre de point de référence pour l'un au moins des groupes (28, 30) celui des points-images du groupe dont la distance vis-à-vis d'un axe qui s'étend dans la direction de la vitesse de l'objet en passant par le barycentre géométrique de celui-ci est maximum.

7. Procédé selon l'une des revendications 3 à 6,
**caractérisé en ce que**, pour la vérification d'une variation périodique de la répartition des points-images (26) associés à l'objet (18), on vérifie quelle distance temporelle des points d'inversion mutuellement successifs du mouvement de l'un au moins des points de référence (26) présentent dans au moins une direction.

8. Procédé selon l'une des revendications 3 à 7,
**caractérisé en ce que** pour la vérification d'une variation périodique de la répartition des points-images (26) associés à l'objet, on vérifie quelle distance temporelle des traversées mutuellement successives de l'un au moins des points de référence à travers une position médiane de son déplacement présentent dans au moins une direction.

9. Procédé selon l'une des revendications 3 à 8,
**caractérisé en ce que** l'on exécute une analyse de Fourier du mouvement temporel de l'un au moins des points de référence.

10. Procédé selon l'une des revendications précédentes,
**caractérisé en ce que** l'objet (18) est reconnu comme étant un piéton si une fréquence, déterminée de façon au moins approximative, de la variation temporelle de la répartition est située entre 0,2 Hz et 3 Hz, de préférence 0,5 Hz et 2,5 Hz.

11. Procédé selon l'une des revendications précédentes,
**caractérisé en ce que** l'on utilise des images de distance dans plusieurs plans ou plusieurs surfaces, et
**en ce que** l'on détermine additionnellement des corrélations entre la variation temporelle de la répartition des points-images dans les plans ou dans les surfaces.

12. Programme d'ordinateur comprenant des moyens de code de programme pour mettre en oeuvre le procédé selon l'une des revendications 1 à 11 lorsque le programme est exécuté sur un ordinateur.

13. Produit de programme d'ordinateur comprenant des moyens de code de programme qui sont mémorisés sur un support de données lisible à l'ordinateur, pour mettre en oeuvre le procédé selon l'une des revendications 1 à 11 quand le programme d'ordinateur est exécuté sur un ordinateur.

14. Appareil pour la reconnaissance et la poursuite d'objets, comprenant au moins un capteur optoélectronique, de préférence un scanneur à laser (10) et un système de traitement de données (24) relié au capteur optoélectronique, qui est réalisé pour la reconnaissance de piétons (18) en se basant sur des images de distances, prises en succession temporelle par au moins un capteur (10) pour un rayonnement électromagnétique, en particulier un scanneur à laser, d'une zone de détection (14) du capteur (10), comprenant des moyens pour procéder à une poursuite d'objets qui correspondent à des articles (16, 18) détectés par le capteur dans la zone de détection (14), de sorte que pour au moins un objet (18) dans plusieurs cycles mutuellement successifs, des répartitions de points-images (26) associés à l'objet dans les cycles respectifs sont déterminées,
des moyens pour vérifier si les répartitions de points-images varient au moins approximativement périodiquement en fonction du temps, et
des moyens pour subdiviser au moins certains des points-images (26) associés à l'objet (18) en deux groupes (28, 30) dont les points-images (26) pourraient correspondre respectivement à une jambe, afin de déterminer la variation périodique de la répartition des points-images, dans lesquels les groupes (28, 30) sont définis par le fait que leurs points-images (26) sont agencés sur chacun des côtés d'un axe qui s'étend par le barycentre des points-images (26) de l'objet (18) parallèlement à leur vitesse.
